(19) Europäisches Patentamt / European Patent Office / Office européen des brevets

(11) **EP 2 930 472 A1**

(12) **EUROPEAN PATENT APPLICATION**

(43) Date of publication:
**14.10.2015 Bulletin 2015/42**

(51) Int Cl.:
***G01D 5/347*** *(2006.01)*

(21) Application number: **15162732.0**

(22) Date of filing: **08.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **10.04.2014 JP 2014080906**

(71) Applicant: **Kabushiki Kaisha Yaskawa Denki Kitakyushu-shi, Fukuoka 806-0004 (JP)**

(72) Inventors:
• **Yoshida, Yasushi**
  **Kitakyushu-shi, Fukuoka 806-0004 (JP)**
• **Murokita, Ikuma**
  **Kitakyushu-shi, Fukuoka 806-0004 (JP)**

(74) Representative: **Viering, Jentschura & Partner Patent- und Rechtsanwälte Grillparzerstrasse 14 81675 München (DE)**

(54) **ENCODER, ENCODER-EQUIPPED MOTOR, AND SERVO SYSTEM**

(57) An encoder includes a disk on a rotor. First slit tracks each include slits in an incremental pattern in a measurement direction. A second slit track includes slits in an absolute pattern in the measurement direction. A light source emits light to the first and second slit tracks. First light reception arrays are offset from each other in a width direction perpendicular to the measurement direction. The first light reception arrays receive light reflected by the first slit tracks to output first light reception signals. The second light reception arrays receive light reflected by the second slit track to output second light reception signals. Selecting means selects one of the second light reception signals based on the first light reception signals. Position data generating means generates position data of the rotor based on one of the first light reception signals and the one second light reception signal.

**FIG. 2**

**Description**

BACKGROUND

FIELD OF THE INVENTION

The present disclosure relates to an encoder, an encoder-equipped motor, and a servo system.

DISCUSSION OF THE BACKGROUND

Japanese Unexamined Patent Application Publication No. 2012-103032 discloses a reflective encoder. The reflective encoder includes, on a rotary disk, a group of incremental light reception elements and two groups of absolute light reception elements. The group of incremental light reception elements is divided into two areas in the circumferential direction of the rotary disk with a light source located between the divided incremental light reception elements. One group of the absolute light reception elements is disposed at an outer side of the light source in the radial direction of the rotary disk, and the other group of the absolute light reception elements is disposed at an inner side of the light source in the radial direction of the rotary disk.

The contents of Japanese Unexamined Patent Application Publication No. 2012-103032 are incorporated herein by reference in their entirety.

There is a need for a reflective encoder that is more highly accurate in detecting an absolute position and thus ensures more reliable position data.

It is an object of the present disclosure to provide an encoder, an encoder-equipped motor, and a servo system that ensure more reliable position data.

SUMMARY

According to one aspect of the present disclosure, an encoder includes a disk, a plurality of first slit tracks, at least one second slit track, a light source, two first light reception arrays, two second light reception arrays, selecting means, and position data generating means. The disk is disposed on a rotor. The plurality of first slit tracks are disposed on the disk and each include a plurality of slits arranged in an incremental pattern in a measurement direction. The at least one second slit track is disposed on the disk and includes a plurality of slits arranged in an absolute pattern in the measurement direction.

The light source is configured to emit light to the plurality of first slit tracks and to the at least one second slit track. The two first light reception arrays are disposed at positions offset from each other in a width direction approximately perpendicular to the measurement direction. The two first light reception arrays are configured to receive the light reflected by or transmitted through the plurality of first slit tracks respectively corresponding to the two first light reception arrays so as to output two first light reception signals. The two second light reception arrays are configured to receive the light reflected by or transmitted through the at least one second slit track respectively corresponding to the two second light reception arrays so as to output two second light reception signals having phases different from each other. The selecting means selects one second light reception signal among the two second light reception signals based on the two first light reception signals. The position data generating means generates position data of the rotor based on at least one first light reception signal among the two first light reception signals and based on the one second light reception signal selected by the selecting means.

According to another aspect of the present disclosure, an encoder-equipped motor includes a motor and the above-described encoder. The motor includes a stator and a rotor configured to rotate relative to the stator. The encoder is configured to detect at least one of a position of the rotor and a speed of the rotor.

According to the other aspect of the present disclosure, a servo system includes a motor, the above-described encoder, and a control device. The motor includes a stator and a rotor configured to rotate relative to the stator. The encoder is configured to detect at least one of a position of the rotor and a speed of the rotor. The control device is configured to control the motor based on a result of the encoder detecting at least one of the position of the rotor and the speed of the rotor.

The encoder, the encoder-equipped motor, and the servo system according to the present disclosure improve reliability of positon data.

BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

> FIG. 1 is a diagram illustrating a servo system according to an embodiment;
> FIG. 2 is a diagram illustrating an encoder according to the embodiment;
> FIG. 3 illustrates a disk according to the embodiment;
> FIG. 4 illustrates slit tracks according to the embodiment;
> FIG. 5 illustrates an optical module and light reception arrays according to the embodiment;
> FIG. 6 is a diagram illustrating a position data generator according to the embodiment;
> FIG. 7 illustrates exemplary waveforms of light reception signals generated by the light reception arrays in a case where no eccentricity occurs between the disk and a shaft and no inclination occurs in the rotational direction of the optical module;
> FIG. 8 illustrates exemplary waveforms of light reception signals generated by the light reception arrays in a case where an eccentricity occurs between the disk and the shaft and/or an inclination occurs in the rotational direction of the optical module;
> FIG. 9 illustrates exemplary waveforms of light reception signals generated by light reception arrays in a case where a light source is in normal state and in a case where current applied to the light source is increased;
> FIG. 10 illustrates the optical module and the light reception arrays according to a modification;
> FIG. 11 illustrates the optical module and the light reception arrays according to another modification; and
> FIG. 12 illustrates the optical module and the light reception arrays according to another modification.

DESCRIPTION OF THE EMBODIMENTS

The embodiments will now be described with reference to the accompanying drawings, wherein like reference numerals designate corresponding or identical elements throughout the various drawings.

First, description will be made with regard to a conception that the inventors have reached and with regard to research and study that the inventors conducted in order to reach the conception.

As described in the embodiment later, some encoders include two slit tracks and two light reception arrays. The two slit tracks each have an absolute pattern. The two light reception arrays respectively receive light reflected by or transmitted through the two slit tracks, and respectively output absolute signals having phases different from each other.

In such encoder, the two slit tracks are disposed on a disk with their absolute patterns shifted from each other by half a pitch in a measurement direction. Instead of the absolute patterns offset from each other, some encoders have the light reception arrays shifted from each other in the measurement direction. As a result, the output signals obtained from the two light reception arrays have phases different from each other by 180°. Thus, an absolute position is identified using a signal obtained from an absolute pattern that is outside an unstable area such as a point at which a detection pattern changes. In this manner, an attempt is made to improve detection accuracy.

Incidentally, an eccentricity may occur between the disk and a shaft, or an optical module may be inclined in, for example, a direction of rotation about an optical axis. In this case, the slits of the disk face the optical module at an angle. This results in a phase difference between the output signals obtained from the two light reception arrays, which possibly affects accuracy of detecting the absolute position.

In this respect, the inventors' study has found that the above-described phase difference between the output signals obtained from the two light reception arrays that output the absolute signals can be identified using position data obtained from two light reception arrays. Specifically, the two light reception arrays are offset from each other in a radial direction and each receive light reflected by or transmitted through slit tracks each having an incremental pattern. With this knowledge, the inventors further conducted research and study, and as a result, conceived of the optical encoders and other elements according to the embodiments described below. The embodiments will be described in detail below. It should be noted that the circumstances and advantageous effects described in the following embodiments are presented for exemplary purposes only, and it will be readily appreciated that the embodiments provide additional operations and advantageous effects.

<1. Servo system>

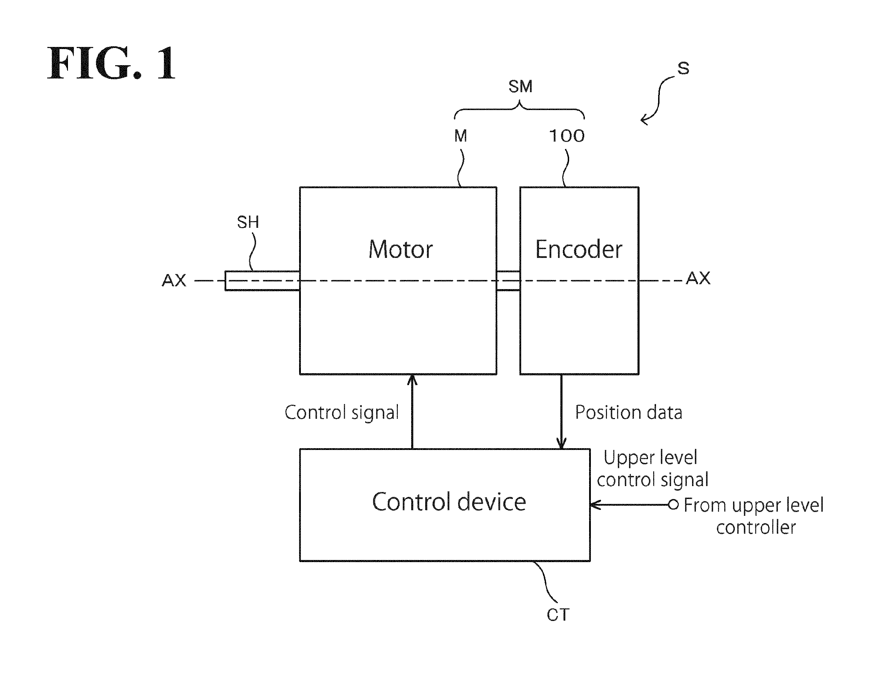

First, by referring to FIG. 1, a configuration of a servo system according to this embodiment will be described. As illustrated in FIG. 1, a servo system S includes a servo motor SM and a control device CT. The servo motor SM includes an encoder 100 and a motor M.

The motor M is an exemplary power source not including the encoder 100. The motor M is a rotary motor, in which a rotor (not illustrated) rotates relative to a stator (not illustrated). A shaft SH is secured to the rotor and rotated about a shaft core AX. In this manner, the motor M outputs rotational force.

Although the motor M itself may be occasionally referred to as servo motor, a configuration containing the encoder 100 will be referred to as the servo motor SM in this embodiment. That is, the servo motor SM is an example of the encoder-equipped motor. For ease of description, the encoder-equipped motor is such a servo motor that is controlled to follow a target value of position, speed, or some other parameter. This, however, should not be construed in a limiting sense. The term "encoder-equipped motor" encompasses motors used in other than servo systems provided with an encoder such as in a case where the output of the encoder is used for display purposes only.

There is no particular limitation to the motor M insofar as the encoder 100 in the motor M is capable of detecting position data, for example. Also the motor M will not be limited to an electric motor, which utilizes electricity as power source. Examples of motors that use other power sources include, but are not limited to, hydraulic motors, pneumatic motors, and steam motors. In the following description, the motor M is an electric motor for the sake of description.

The motor M is coupled to the shaft SH on the opposite side of the motor M's output side of rotational force. This, however, should not be construed in a limiting sense; the encoder 100 may be coupled to the shaft SH on the motor M's output side of rotational force. The encoder 100 detects the position of the shaft SH (rotor), thereby detecting the position of the motor M (which will be also referred to as rotational angle), and then outputs position data indicating the position.

Instead of or in addition to the position of the motor M, the encoder 100 may detect at least one of the speed (also referred to as "rotational speed" or "angular velocity") and the acceleration (also referred to as "rotational acceleration" or "angular acceleration") of the motor M. The speed and the acceleration of the motor M are detectable by exemplary processing such as first or second order time-differential of the position, and counting detection signals (for example, incremental signals, described later) for a predetermined period of time. In the following description, the physical amount detected by the encoder 100 is the position for convenience of description.

The control device CT acquires position data output from the encoder 100, and controls the rotation of the motor M based on the position data. Thus, in this embodiment, in which the motor M is an electric motor, the control device CT controls current, voltage, or the like to be applied to the motor M based on the position data so as to control the rotation of the motor M. The control device CT may also acquire an upper level control signal from an upper level controller, not illustrated. In this case, the control device CT may control the motor M to output from the shaft SH a rotational force with which the position or the like indicated by the upper level control signal is achievable. When the motor M is driven by another power source such as a hydraulic power source, a pneumatic power source, and a steam power source, the control device CT may control the supply from the power source to control the rotation of the motor M.

<2. Encoder>

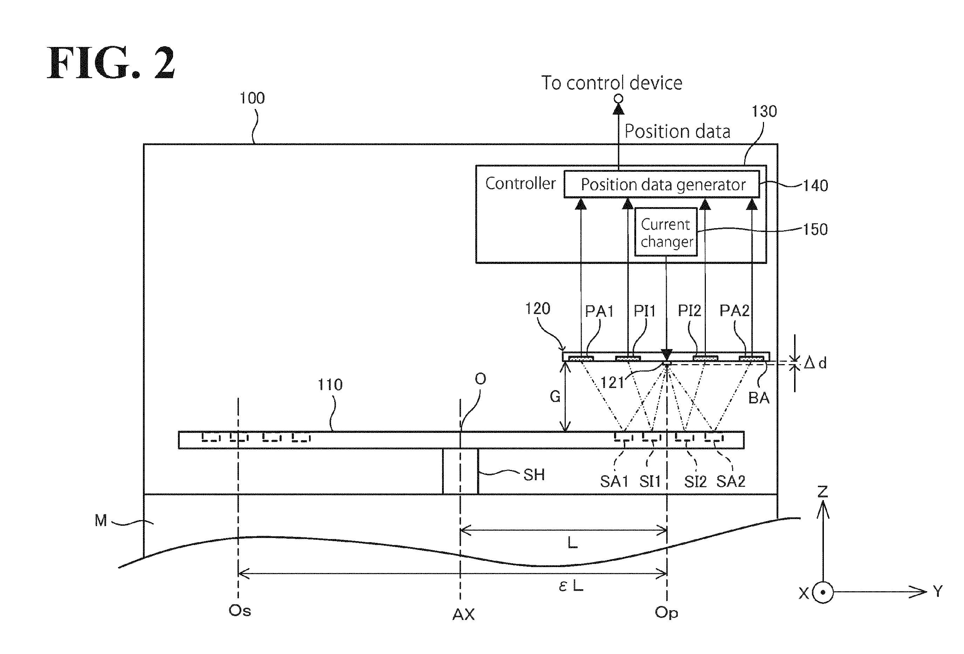

Next, the encoder 100 according to this embodiment will be described. As illustrated in FIG. 2, the encoder 100 includes a disk 110, an optical module 120, and a controller 130.

For convenience of description of the encoder 100, the directions including the upper and lower directions are defined in the following manner and used as necessary. Referring to FIG. 2, the direction in which the disk 110 faces the optical module 120, that is, the positive direction in a Z axis direction is defined as "upper direction", while the negative direction in the Z axis direction is defined as "lower direction". It should be noted, however, that the directions including the upper and lower directions are subject to change in accordance with how the encoder 100 is installed. Hence, the definitions should not be construed as limiting the positional relationship of the components of the encoder 100.

(2-1. Disk)

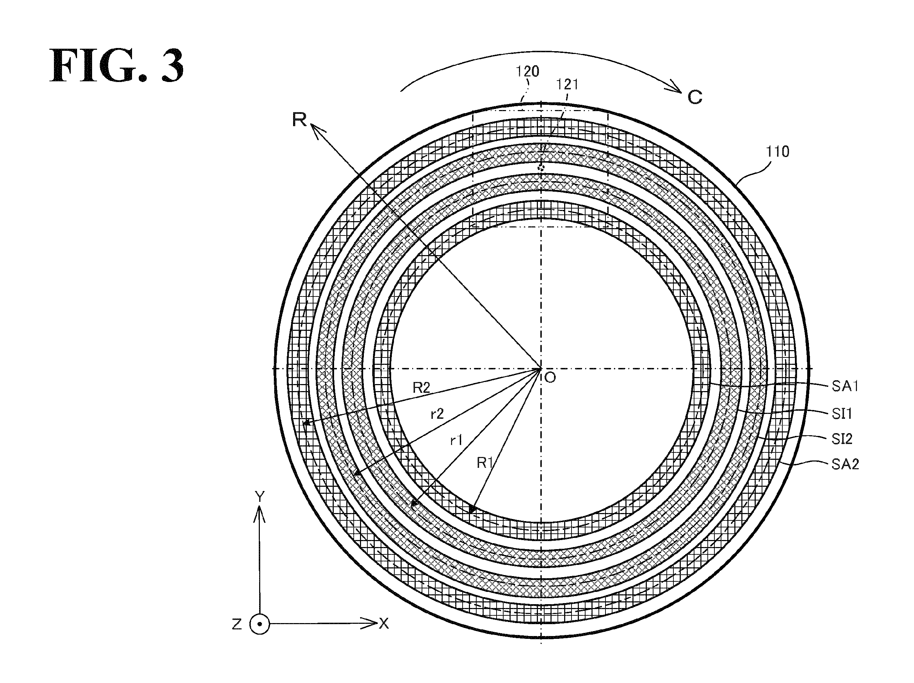

As illustrated in FIG. 3, the disk 110 has a circular plate shape and has a disk center O, which approximately matches a shaft core AX. The disk 110 is coupled to the shaft SH of the motor M to rotate together with the rotation of the shaft SH. In this embodiment, the circular disk 110 is taken as an example of the measurement target for measuring the rotation of the motor M. The measurement target may be any of other members than the disk 110, examples including an end surface of the shaft SH. While in the example illustrated in FIG. 2 the disk 110 is directly coupled to the shaft SH, the disk 110 may alternatively be coupled to the shaft SH through a coupling member such as a hub.

As illustrated in FIG. 3, the disk 110 includes a plurality of slit tracks SA1, SA2, SI1, and SI2. The disk 110 rotates together with the driving of the motor M, whereas the optical module 120 is fixed while facing part of the disk 110. Thus, together with the driving of the motor M, the slit tracks SA1, SA2, SI1, and SI2 and the optical module 120 move relative to each other in the measurement direction (which is the direction indicated by the arrow C in FIG. 3, and hereinafter occasionally referred to as "measurement direction C").

Here, the term "measurement direction" refers to a direction in which the optical module 120 optically measures each slit track formed on the disk 110. In a rotary encoder in which the measurement target is a disk, as in the rotary encoder 100 with the disk 110 according to this embodiment, the measurement direction matches a circumferential direction around the disk center O of the disk 110.

(2-2. Optical detection mechanism)

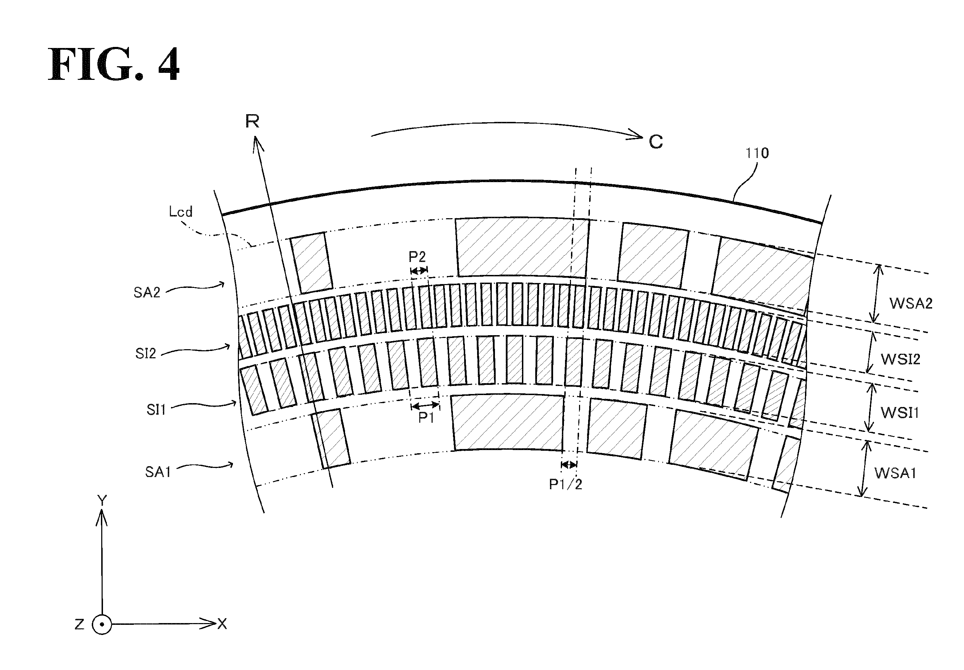

An optical detection mechanism includes the slit tracks SA1, SA2, SI1, and SI2, and the optical module 120. Each of the slit tracks is a track in the form of a ring disposed around the disk center O on the upper surface of the disk 110. Each slit track includes a plurality of reflection slits (hatched with slanted lines in FIG. 4) arranged throughout the track in the measurement direction C. Each of the reflection slits reflects light emitted from a light source 121.

(2-2-1. Disk)

The disk 110 is made of a light reflecting material such as metal. For a non-light-reflecting portion of the surface of the disk 110, a material of low reflectance (for example, chromic oxide) is disposed by a method such as application. Thus, the reflection slits are formed at other portions than where the low reflectance material is formed. It is also possible to form the reflection slits by making the non-light-reflecting portion a coarse surface by sputtering or a similar method to ensure low reflectance.

There is no particular limitation to the material of the disk 110 and the method of preparing the disk 110. An exemplary material of the disk 110 is a light transmitting material such as glass and transparent resin. In this case, the reflection slits may be formed by mounting a light reflecting material (such as aluminum) on the surface of the disk 110 by deposition or another method.

As used herein, the term "slit" refers to an area that is formed on the disk 110 and that performs actions on the light emitted from the light source 121. Examples of the actions include, but are not limited to, reflection (including reflective diffraction) and transmission (including transmissive diffraction). Each of the slit tracks includes a plurality of such slits arranged in a predetermined pattern in the measurement direction. In this embodiment, each slit is a reflection slit.

Four slit tracks are disposed next to each other on the upper surface of the disk 110 in a width direction (which is a direction indicated by the arrow R in FIG. 3, and hereinafter occasionally referred to as "width direction R"). The term "width direction" refers to a radial direction of the disk 110, which is a direction approximately perpendicular to the measurement direction C. The dimension of each slit track in the width direction R corresponds to the width of each slit track. The four slit tracks are coaxial and arranged in the order: SA1, SI1, SI2, SA2 in the width direction R. Each slit track will be described in more detail by referring to FIG. 4, which is a partially enlarged view of an area of the disk 110 facing the optical module 120.

As illustrated in FIG. 4, the slit track SA1 includes a plurality of reflection slits arranged throughout the circumference of the disk 110 in an absolute pattern in the measurement direction C. Similarly, the slit track SA2 includes a plurality of reflection slits arranged throughout the circumference of the disk 110 in an absolute pattern in the measurement direction C. The slit tracks SA1 and SA2 are examples of the second slit tracks.

The term "absolute pattern" refers to a pattern in which the position, ratio, or another parameter of the reflection slits within the angle at which the optical module 120, described later, is opposed to the light reception arrays is uniquely determined on the circumference of the disk 110. In the exemplary absolute pattern illustrated in FIG. 4, where the motor M is at one angular position, a plurality of light reception elements of the opposing light reception array form a combination of bit patterns indicating detection or undetection, and the combination uniquely indicates the absolute position representing the angular position. The term "absolute position" refers to an angular position relative to an origin of the disk 110 on the circumference of the disk 110. The origin is set at a convenient angular position on the circumference of the disk 110, and the absolute pattern is formed based on the origin.

This exemplary pattern ensures generation of a pattern that one-dimensionally indicates the absolute position of the motor M using bits corresponding to the number of the light-receiving elements of the light-receiving array. This, however, should not be construed as limiting the absolute pattern. For example, it is possible to use a pattern that multi-dimensionally indicates the absolute position using bits corresponding to the number of the light-receiving elements. It is also possible to use various other patterns than the predetermined bit pattern; examples include a pattern in which a physical quantity such as the amount or the phase of the light received by the light reception elements changes to uniquely indicate the absolute position, and a pattern in which a code sequence of the absolute pattern is modulated.

In this embodiment, two slit tracks SA1 and SA2 are formed in similar absolute patterns, and the absolute patterns are offset from each other by a length of 1/2 bit in the measurement direction C. This offset amount corresponds to, for example, half a pitch $P1$ of the reflection slit of the slit track SI1. If the slit tracks SA1 and SA2 are not offset from each other in the case of using one-dimensional absolute pattern to indicate the absolute position as in this embodiment, the following may occur. When the light reception elements of the light reception arrays PA1 and PA2 face the edges of the reflection slits or face a vicinity of the edges of the reflection slits, an area of bit pattern transition occurs. In the area of bit pattern transition, the accuracy of detecting the absolute position may degrade. In view of this, the slit tracks SA1 and SA2 are offset from each other in this embodiment. For example, when the absolute position to be obtained through the slit track SA1 is based on the area of bit pattern transition, a detection signal obtained through the slit track SA2 is used to calculate the absolute position. Inversely, when the absolute position to be obtained through the slit track SA2 is based on the area of bit pattern transition, a detection signal obtained through the slit track SA1 is used to calculate the absolute position. This improves accuracy of detecting the absolute position. This configuration necessitates uniformity of the amounts of light received by the light reception arrays PA1 and PA2. Still, this configuration is realized in this embodiment by arranging the light reception arrays PA1 and PA2 approximately at the same distance from the light source 121.

Instead of the absolute patterns of the slit track SA1 and SA2 being offset from each other, the light reception arrays PA1 and PA2, which respectively correspond to the slit tracks SA1 and SA2, may be offset from each other in the measurement direction C.

In contrast, the slit track SI1 includes a plurality of reflection slits arranged throughout the circumference of the disk 110 in an incremental pattern in the measurement direction C. Similarly, the slit track SI2 includes a plurality of reflection slits arranged throughout the circumference of the disk 110 in an incremental pattern in the measurement direction C. The slit tracks SI1 and SI2 are examples of the first slit tracks.

The term "incremental pattern" refers to a pattern of regular repetition of slits at a predetermined pitch, as illustrated in FIG. 4. The term "pitch" refers to an arrangement interval of two adjacent reflection slits of the slit tracks SI1 and SI2, which have the incremental patterns. As illustrated in FIG. 4, the slit track SI1 has a pitch of $P1$, and the slit track SI2 has a pitch of $P2$. The incremental pattern is different from the absolute pattern, which indicates the absolute position using bits each indicating whether each of the plurality of light reception elements has detected light or not. Instead, the incremental pattern uses a sum of detection signals obtained by one or more light reception elements to indicate a position of the motor M on a one-pitch basis or within one pitch. Thus, even though the incremental pattern does not indicate the absolute position of the motor M, the incremental pattern ensures much higher accuracy of indicating the position of the motor M than the accuracy realized by the absolute pattern.

In this embodiment, the pitch $P1$ of the slit track SI1 is longer than the pitch $P2$ of the slit track SI2. Specifically, the pitches $P1$ and $P2$ satisfy: $P1 = 2 \times P2$. Thus, in this embodiment, the number of the reflection slits of the slit track SI2 is twice the number of the reflection slits of the slit track SI1. This, however, should not be construed as limiting the relationship between the pitches of the slits. Other various possible examples of the number of the reflection slits of the slit track SI2 include, but are not limited to, three times, four times, and five times the number of the reflection slits of the slit track SI1.

In this embodiment, the reflection slits of the slit tracks SA1 and SA2 each have a minimal length in the measurement direction C that is substantially identical to the pitch $P1$ of the reflection slits of the slit track SI1. As a result, the absolute signals based on the slit tracks SA1 and SA2 each have a resolution that substantially matches the number of the reflection slits of the slit track SI1. This, however, should not be construed as limiting the minimal length of the reflection slits of the slit tracks SA1 and SA2. The number of the reflection slits of the slit track SI1 is preferably equal to or greater than the resolution of each absolute signal.

(2-2-2. Optical module)

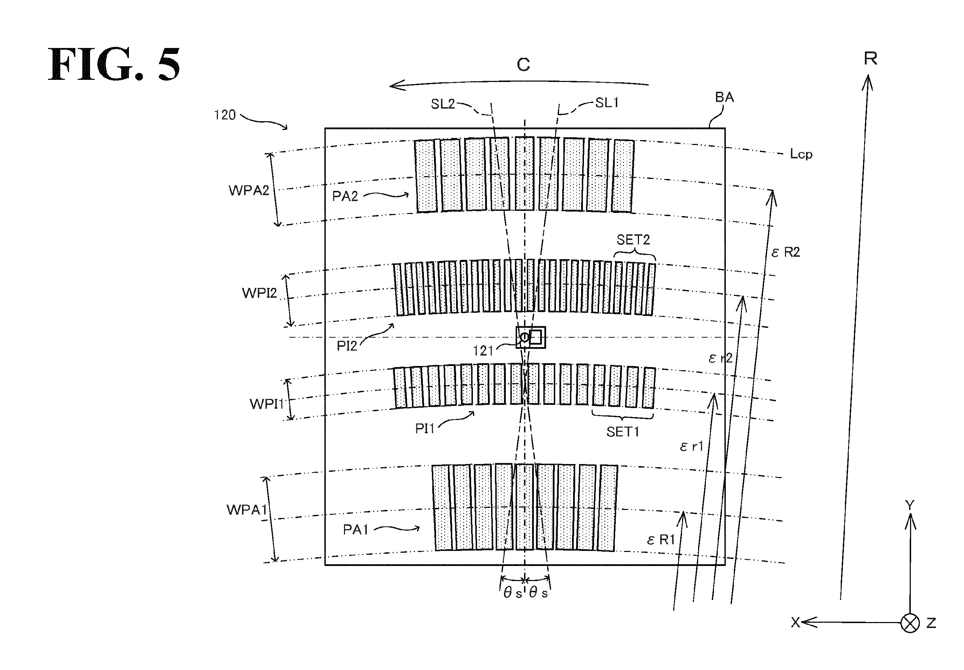

As illustrated in FIGs. 2 and 5, the optical module 120 is a single substrate BA, which is parallel to the disk 110. This ensures a thin encoder 100 and facilitates the production of the optical module 120. Together with the rotation of the disk 110, the optical module 120 moves in the measurement direction C relative to the slit tracks SA1, SA2, SI1, and SI2. The optical module 120 may not necessarily have a form of a single substrate BA; the components of the optical module 120 may be a plurality of substrates insofar as these substrates are concentrated together. Alternatively, the optical module 120 may have other than a form of a substrate.

As illustrated in FIGs. 2 and 5, on the surface of the substrate BA facing the disk 110, the optical module 120 includes the light source 121, and includes the plurality of light reception arrays PA1, PA2, PI1, and PI2.

As illustrated in FIG. 3, the light source 121 faces a position between the slit track SI1 and the slit track SI2. When the four slit tracks SA1, SA2, SI1, and SI2 pass through a position facing the optical module 120, the light source 121 emits light to the portions of the four slit tracks SA1, SA2, SI1, and SI2 that face the optical module 120.

There is no particular limitation to the light source 121 insofar as the light source 121 is capable of emitting light to the area intended to be irradiated. An example is a light emitting diode (LED). The light source 121 is formed as a point light source, where no optical lens or like element is particularly disposed, and emits diffused light from a light emitting portion. By the term "point light source", it is not necessarily meant to be an accurate point. It will be appreciated that light can be emitted from a finite emission surface of a light source insofar as the light source is capable of emitting diffused light from an approximately pointed position in design viewpoints or in operation principle viewpoints. The term "diffused light" may not necessarily be light that can be emitted in every direction from the point light source. The diffused light encompasses light emitted and diffused in a limited direction. That is, the diffused light encompasses any light that is more diffusible than parallel light. The use of a point light source in this manner ensures that the light source 121 uniformly emits light to the four slit tracks SA1, SA2, SI1, and SI2 when the four slit tracks SA1, SA2, SI1, and SI2 are passing through the position facing the light source 121. Additionally, neither concentration nor diffusion of light is performed by an optical element. This eliminates or minimizes an error caused by the optical element, and increases straightness of the light toward the slit tracks.

The plurality of light reception arrays PA1, PA2, PI1, and PI2 are disposed around the light source 121 and respectively correspond to the slit tracks. Each of the plurality of light reception arrays PA1, PA2, PI1, and PI2 includes a plurality of light reception elements (dotted portions in FIG. 5) that receive light reflected by the reflection slits of a corresponding slit track. As illustrated in FIG. 5, the plurality of light reception elements are aligned in the measurement direction C.

The light source 121 emits diffused light. Thus, an image of the slit tracks projected on the optical module 120 is enlarged by a predetermined enlargement ratio $\varepsilon$ that depends on the optical path length. As illustrated in FIGs. 4 and 5, assume that the slit tracks SA1, SA2, SI1, and SI2 respectively have lengths WSA1, WSA2, WSI1, and WSI2 in the width direction R, and that reflections of the light reflected by the slit tracks SA1, SA2, SI1, and SI2 respectively have lengths WPA1, WPA2, WPI1, and WPI2 in the width direction R when the reflections are projected on the optical module 120. Under the assumption, WPA1, WPA2, WPI1, and WPI2 are respectively $\varepsilon$ times WSA1, WSA2, WSI1, and WSI2. In this embodiment, as illustrated in FIG. 5, the length of each light reception element of each light reception array in the width direction R is substantially equal to the length in the width direction R of the shape of the projection of each slit on the optical module 120. This, however, should not be construed as limiting the length of each light reception element in the width direction R.

Similarly, the optical module 120 in the measurement direction C is affected by the enlargement ratio $\varepsilon$, that is, the disk 110 in the measurement direction C as enlarged by the enlargement ratio $\varepsilon$ is projected on the optical module 120. This will be described in more detail below by referring to the optical module 120 in the measurement direction C with the light source 121 located at the position illustrated in FIG. 2, for ease of description. The disk 110 as viewed in the measurement direction C forms a circle centered around the shaft core AX (disk center O). When, in contrast, this circle is projected on the optical module 120, the center of the circle projected on the optical module 120 is at a distance $\varepsilon L$ from an optical center Op, which is a position on the surface of the disk 110 corresponding to the light source 121. Distance $L$ denotes the distance between the shaft core AX and the optical center Op, and distance $\varepsilon L$ denotes the distance $L$ enlarged by the enlargement ratio $\varepsilon$. In FIG. 2, the center of the circle projected on the optical module 120 is indicated by Os, which is referred to as measurement center. Thus, the circle projected on the optical module 120 defines a line that has a radius of $\varepsilon L$ and that is centered around the measurement center Os, which is on an imaginary line crossing the optical center Op and the shaft core AX and which is spaced apart from the optical center Op toward the shaft core AX by the distance $\varepsilon L$.

As illustrated in FIG. 4 and FIG. 5, circular arc lines Lcd and Lcp indicate correspondence between the length of the disk 110 in the measurement direction C and the length of optical module 120 in the measurement direction C. As illustrated in FIG. 4, the line Lcd is along the measurement direction C on the disk 110. As illustrated in FIG. 5, the line Lcp is along the measurement direction C on the substrate BA (the line Lcp is the line Lcd projected on the optical module 120).

As illustrated in FIG. 2, $G$ denotes the length of the gap between the optical module 120 and the disk 110, and $\Delta d$ denotes the amount by which the light source 121 protrudes from the substrate BA. Here, the enlargement ratio $\varepsilon$ is represented by the following Formula (1).

$$\varepsilon = (2G - \Delta d)/(G - \Delta d) \quad \cdots \quad (\text{Formula 1})$$

An example of the individual light reception element is a photodiode. This, however, should not be construed in a limiting sense. There is no particular limitation to the light reception element insofar as the light reception element is capable of receiving light emitted from the light source 121 and converting the received light into an electrical signal.

The light reception arrays according to this embodiment are disposed such that the light reception arrays respectively correspond to the four slit tracks SA1, SA2, SI1, and SI2. Specifically, the light reception array PA1 receives light reflected by the slit track SA1, and the light reception array PA2 receives light reflected by the slit track SA2. The light reception array PI1 receives light reflected by the slit track SI1, and the light reception array PI2 receives light reflected by the slit track SI2.

The light source 121, the light reception arrays PA1 and PA2, and the light reception arrays PI1 and PI2 are arranged in the manner illustrated in FIG. 5. The light reception arrays PA1 and PA2 respectively correspond to the absolute patterns, and are disposed with the light source 121 between the light reception arrays PA1 and PA2 in the width direction R. In this embodiment, the light reception array PA1 is disposed further inward, while the light reception array PA2 is disposed further outward. Also in this embodiment, the light reception array PA1 and the light source 121 are approximately at the same distance from the light source 121. Basically (that is, disregarding the curvature based on the measurement center Os), the light reception arrays PA1 and PA2 are line-symmetric relative to an imaginary line passing through the light source 121 in the width direction R and line-symmetric relative to an imaginary line passing through the light source 121 in the measurement direction C. The plurality of light reception elements of the light reception array PA1 are aligned in the measurement direction C (line Lcp) at constant pitches, and the plurality of light reception elements of the light reception array PA2 are aligned in the measurement direction C (line Lcp) at constant pitches. The light reception arrays PA1 and PA2 respectively receive light reflected from the slit tracks SA1 and SA2 to generate absolute signals. Each of the absolute signals includes a bit pattern corresponding to the number of the light reception elements (nine in this embodiment). The light reception arrays PA1 and PA2 are examples of the second light reception arrays.

The light reception arrays PI1 and PI2 respectively correspond to the incremental patterns, and are disposed at positions offset from each other in the width direction R. The light reception array PI1 is disposed between the light reception array PA1 and the light source 121. The light reception array PI2, which corresponds to one of the incremental patterns, is disposed between the light reception array PA2 and the light source 121. The light reception array PI1 is disposed further inward than the light reception array PI2. The light reception array PI1 and the light reception array PI2 are approximately at the same distance from the light source 121. Basically (that is, disregarding the curvature based on the measurement center Os), the light reception arrays PI1 and PI2 are line-symmetric relative to the imaginary line passing through the light source 121 in the width direction R and line-symmetric relative to the imaginary line passing through the light source 121 in the measurement direction C. The light reception arrays PI1 and PI2 are examples of the first light reception arrays.

In this embodiment, the absolute patterns are one-dimensional, and each of the light reception arrays PA1 and PA2, which correspond to the one-dimensional patterns, includes a plurality of light reception elements (nine light reception elements in this embodiment). The plurality of light reception elements are aligned in the measurement direction C (line Lcp) to receive light reflected by the reflection slits of the slit track SA1 or SA2 corresponding to the plurality of light reception elements. As described above, each individual reception or non-reception of light is indicated by a bit, and the absolute position is indicated by nine bits. The light reception signals received by the plurality of light reception elements are processed independently of each other in the position data generator 140, and then the absolute position coded into a serial bit pattern is decoded using a combination of the light reception signals. These light reception signals obtained from the light reception arrays PA1 and PA2 are each referred to as "absolute signal". The absolute signal is an example of the second light reception signal. When some other absolute patterns than the absolute patterns used in this embodiment are used, the light reception arrays PA1 and PA2 respectively would have configurations corresponding to the some other absolute patterns.

The light reception array PI1 corresponds to the slit track SI1 and includes a plurality of light reception elements aligned in the measurement direction C (line Lcp) to receive light reflected by the reflection slits of the slit track SI1. Similarly, the light reception array PI2 corresponds to the slit track SI2 and includes a plurality of light reception elements aligned in the measurement direction C (line Lcp) to receive light reflected by the reflection slits of the slit track SI2. First, the light reception array PI1 will be described.

In this embodiment, a set of four light reception elements (indicated "SET 1" in FIG. 5) is provided in one pitch of the incremental pattern of the slit track SI1 (the one pitch used here is one pitch that is projected on the optical module 120, that is, $\varepsilon \times P1$). Similarly, a plurality of additional sets of four light reception elements are aligned in the measurement direction C. In the incremental pattern, the reflection slits are repeatedly formed on a one-pitch basis. Through rotation of the disk 110, the light reception elements generate periodic signals that constitute one period (referred to as 360° in electrical angle). Since four light reception elements constitute one set corresponding to one pitch, adjacent two light reception elements among the four light reception elements generate periodic signals that are phase-shifted relative to each other by 90°. The four light reception signals will be respectively referred to as A phase signal, B phase signal (which is a signal phase-shifted relative to the A phase signal by 90°), an inverse-of-A-phase signal (which is a signal phase-shifted relative to the A phase signal by 180°), and an inverse-of-B-phase signal (which is a signal phase-shifted relative to the B phase signal by 180°).

The incremental pattern indicates the position of the motor M in one pitch. The four signals of different phases in one set respectively correspond to four signals of different phases in another set. That is, the value of one signal of a phase changes in a similar manner to the value of the corresponding signal of the same phase in the another set. Thus, the signals of the same phases are added together throughout the plurality of sets. Hence, four signals that are phase-shifted relative to each other by 90° are detected from the plurality of light reception elements of the light reception array PI1 illustrated in FIG. 5.

The light reception array PI2 has a similar configuration to the configuration of the light reception array PI1. Specifically, a set of four light reception elements (indicated "SET 2" in FIG. 5) is provided in one pitch of the incremental pattern of the slit track SI2 (the one pitch used here is one pitch that is projected on the optical module 120, that is, $\varepsilon \times P2$). Similarly, a plurality of additional sets of four light reception elements are aligned in the measurement direction C. Thus, each of the light reception arrays PI1 and PI2 generates four signals that are phase-shifted relative to each other by 90°. These four signals will be each referred to as "incremental signal". The incremental signals are examples of the first light reception signal. The light reception array PI2 corresponds to the shorter-pitched slit track SI2, and generates incremental signals that are higher in resolution than the other incremental signals. In view of this, these incremental signals will be each referred to as "high-incremental signal". The light reception array PI1 corresponds to the longer-pitched slit track SI1, and generates incremental signals that are lower in resolution than the other incremental signals. In view of this, these incremental signals will be each referred to as "low-incremental signal".

In this embodiment, four light reception elements are accommodated in one set corresponding to one pitch of the incremental pattern. This, however, should not be construed as limiting the number of the light reception elements to be accommodated in one set. Another possible example is two light reception elements accommodated in one set.

(2-3. Controller)

The controller 130 includes a position data generator 140 and a current changer 150.

The position data generator 140 acquires signals from the optical module 120 at the timing of measuring the absolute position of the motor M (for example, when the encoder 100 is turned on). The signals include two absolute signals each including a bit pattern representing the absolute position, a high-incremental signal including four incremental signals that are phase-shifted relative to each other by 90°, and a low-incremental signal including four incremental signals that are phase-shifted relative to each other by 90°. The position data generator 140 calculates the absolute position of the motor M represented by one absolute signal selected from among the two absolute signals and represented by the two high- and low-incremental signals. Then, the position data generator 140 generates position data indicating the absolute position, and outputs the position data to the control device CT. After the position data generator 140 has measured the absolute position (for example, after the encoder 100 has been turned on and the motor M has started rotating), the position data generator 140 calculates relative position using the high-incremental signal and the low-incremental signal. Then, the position data generator 140 generates position data based on the absolute position and the relative position, and outputs the position data to the control device CT.

The position data generator 140 is an example of the position data generating means for generating position data. There is no particular limitation to how the position data generator 140 should generate the position data; any of various other methods is possible. In this embodiment, the position data generator 140 generates the position data by calculating the absolute position based on the high-incremental signal, based on the low-incremental signal, and based on the one absolute signal selected from among the two absolute signals.

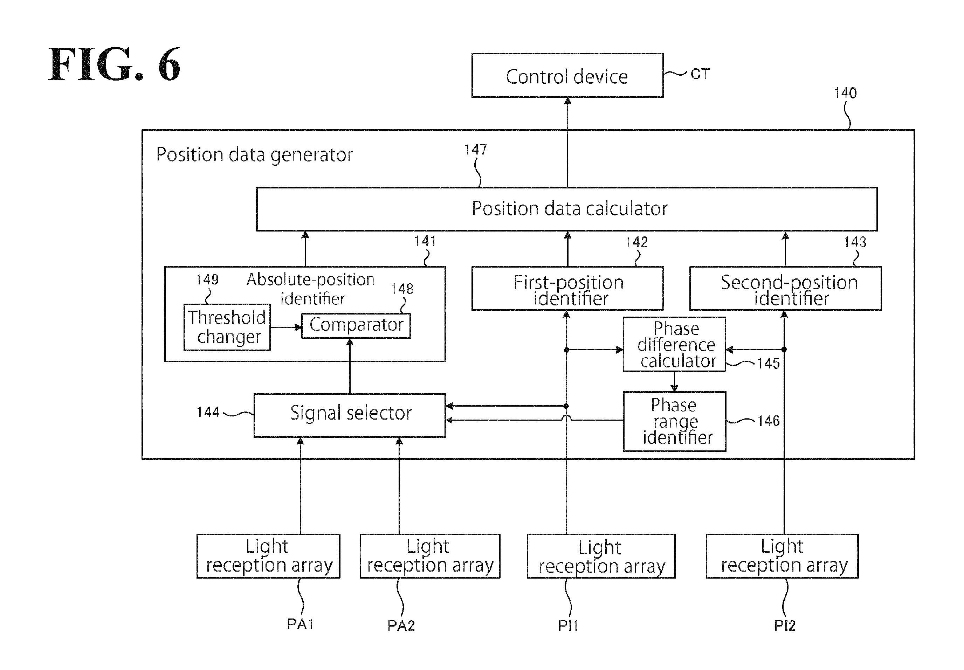

As illustrated in FIG. 6, the position data generator 140 includes an absolute-position identifier 141, a first-position identifier 142, a second-position identifier 143, a signal selector 144, a phase difference calculator 145, a phase range identifier 146, and a position data calculator 147.

The absolute-position identifier 141 includes a comparator 148 and a threshold changer 149. The signal selector 144 selects one absolute signal from among the two absolute signals generated by the light reception arrays PA1 and PA2. The comparator 148 compares the amplitudes of nine output signals (of the nine light reception elements) included in the selected absolute signal with a predetermined threshold. This is for the purpose of binarizing the amplitudes and generating binary bit data indicating the absolute position. Specifically, when the amplitude of a signal is higher than the threshold, the comparator 148 determines that the signal has been detected, while when the amplitude of a signal is below the threshold, the comparator 148 determines that the signal is not detected. The comparator 148 is an example of the comparing means. Then, the absolute-position identifier 141 identifies the absolute position based on a predetermined relationship of correspondence between bit data and absolute positions. The threshold changer 149 changes the threshold of the comparator 148. This changing operation will be described in detail later.

Based on the high- and low-incremental signals from the light reception arrays PI1 and PI2, the signal selector 144 selects one absolute signal from among the two absolute signals output from the light reception arrays PA1 and PA2. Specifically, in accordance with a phase range identified by the phase range identifier 146, the signal selector 144 selects one absolute signal from among the two absolute signals. The signal selector 144 is an example of the selecting means for selecting one second light reception signal from among two second light reception signals. The selecting operation will be described in detail below.

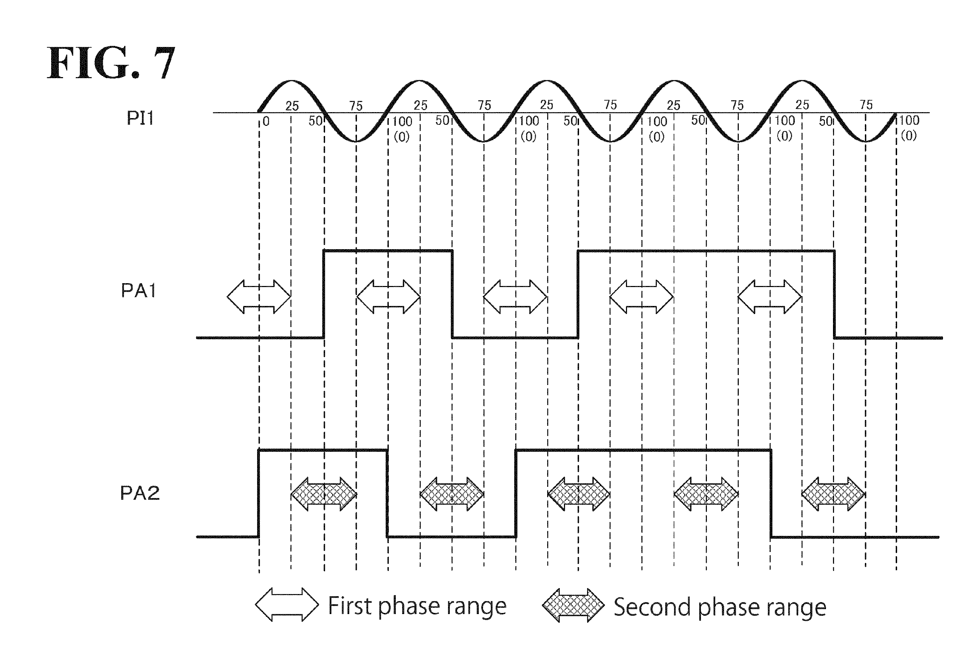

First, description will be made with regard to a case where no eccentricity occurs between the disk 110 and the shaft SH and no inclination occurs in the rotational direction of the optical module 120. FIG. 7 illustrates exemplary waveforms of light reception signals of the respective light reception arrays in the case where no eccentricity occurs between the disk 110 and the shaft SH and no inclination occurs in the rotational direction of the optical module 120. As illustrated in FIG. 7, the uppermost sine waveform is a waveform of one signal among the four incremental signals output from the light reception array PI1. This waveform is attached with numbers each indicating a phase in one period (360° in terms of electrical angle), which is indicated 100%. The intermediate pulse waveform is a waveform of a light reception signal output from one light reception element of the light reception array PA1. The lowermost pulse waveform is a waveform of a light reception signal output from one light reception element of the light reception array PA2. The one light reception element of the light reception array PA2 corresponds to the above-described one light reception element of the light reception array PA1.

As illustrated in FIG. 4, the edges in the measurement direction C of the reflection slits of the slit track SI1 approximately match the edges in the measurement direction C of the reflection slits of the slit track SA2. Each reflection slit of the slit track SA2 (and each reflection slit of the slit track SA1) has a length in the measurement direction C that is approximately equal to an integral multiple of the pitch $P1$ of each reflection slit of the slit track SI1. Thus, as illustrated in FIG. 7, the waveform of the light reception signal generated by the light reception array PA2 shows an ON-OFF change at every 0% (= 100%) phase of the light reception signal generated by the light reception array PI1. In contrast, the absolute patterns of the slit tracks SA1 and SA2 are offset from each other by half a pitch $P1$ (50% phase difference) in the measurement direction C, as described above. Thus, the waveform of the output signal generated from the light reception array PA1 is 50% phase behind the waveform of the light reception array PA2 (in this example, the waveform of the output signal of the light reception array PA1 is 50% phase behind in the measurement direction C).

In this case, the phase range identifier 146 identifies a phase range of from 75% to 25% as a range in which the amplitude of the light reception signal generated by the light reception array PA1 is more stable than the amplitude of the light reception signal generated by the light reception array PA2. In the following description, this phase range will be referred to as first phase range (indicated by white double-headed arrows in FIG. 7). The phase range identifier 146 also identifies a phase range of from 25% to 75% as a range in which the amplitude of the light reception signal input from the light reception array PA2 is more stable than the amplitude of the light reception signal generated by the light reception array PA1. In the following description, this phase range will be referred to as a second phase range (indicated by cross-hatched double-headed arrows in FIG. 7). While in this embodiment the first phase range and the second phase range have the same phase widths (50%), this should not be construed in a limiting sense. The first phase range and the second phase range may have different phase widths, and the phase widths may be other than 50%. The phase range identifier 146 is an example of the identifying means for identifying for identifying a first phase range and a second phase range based on two first light reception signals.

The signal selector 144 receives the first phase range and the second phase range from the phase range identifier 146, and receives the light reception signal from the light reception array PI1. When the phase of the light reception signal input from the light reception array PI1 is within the input first phase range, the signal selector 144 selects the light reception signal generated by the light reception array PA1. When the phase of the light reception signal input from the light reception array PI1 is within the input second phase range, the signal selector 144 selects the light reception signal generated by the light reception array PA2. This ensures that the absolute position is identified using whichever light reception signal that is outside an area in which the amplitude is unstable, examples of such area including a point at which a detection pattern changes. This, in turn, improves detection accuracy.

Next, description will be made with regard to a case where an eccentricity occurs between the disk 110 and the shaft SH and/or an inclination occurs in the rotational direction of the optical module 120. In this case, as illustrated by an imaginary line SL1 or an imaginary line SL2 in FIG. 5, each reflection slit of the disk 110 faces the optical module 120 at an angle depending on the eccentricity direction or the rotational direction. This results in a phase difference between the two light reception signals respectively output from the light reception arrays PI1 and PI2, which are offset from each other in the width direction R. Specifically, when the slits face the optical module 120 at the angle indicated by the imaginary line SL1, the light reception signal generated by the light reception array PI1 is ahead of the light reception signal generated by the light reception array PI2. When the slits face the optical module 120 at the angle indicated by the imaginary line SL2, the light reception signal generated by the light reception array PI1 is behind the light reception signal generated by the light reception array PI2. When the measurement direction C is opposite to the direction indicated by the arrow illustrated in FIG. 5, the light reception arrays PI1 and PI2 replace each other in the foregoing description regarding the phase difference.

The phase difference calculator 145 receives the light reception signals generated by the light reception arrays PI1 and PI2, and calculates a phase difference $\Delta\theta$ between the two light reception signals (the phase difference that the light reception signal generated by the light reception array PI2 has relative to the light reception signal generated by the light reception array PI1). Here, the resolution of the low-incremental signal obtained from the light reception array PI1 is different from the resolution of the high-incremental signal obtained from the light reception array PI2. In view of this, it is possible to convert an electrical angle obtained from the two light reception signals into a mechanical angle. There is no particular limitation to the method of converting the electrical angle into the mechanical angle. An exemplary method is to set a multiple of position data of the lower resolution higher than a multiple of position data of the higher resolution so as to make the resolutions equal to each other after the multiplying processing. In this embodiment, the number of the reflection slits of the slit track SI2 is twice the number of the reflection slits of the slit track SI1, and the resolution of the high-incremental signal is twice the resolution of the low-incremental signal, as described above. When the multiple of the high-incremental signal is $2^n$, the multiple of the low-incremental signal may be $2^{n+1}$. This ensures that the resolutions are equal to each other after the multiplying processing.

Based on the calculated phase difference $\Delta\theta$, the phase difference calculator 145 calculates a phase difference that the light reception signal generated by the light reception array PA1 has relative to the light reception signal generated by the light reception array PI1 (hereinafter referred to as "first phase difference $\Delta\theta1$"), and calculates a phase difference that the light reception signal generated by the light reception array PA2 has relative to the light reception signal generated by the light reception array PI1 (hereinafter referred to as "second phase difference $\Delta\theta2$"). The phase difference calculator 145 is an example of the calculating means.

There is no particular limitation to the method of calculating the first phase difference $\Delta\theta1$ and the second phase difference $\Delta\theta2$. An exemplary method is as follows. As illustrated in FIG. 3, assume that the slit track SI1 has radius $r1,$ the slit track SI2 has radius $r2,$ the slit track SA1 has radius $R1,$ and the slit track SA2 has radius $R2.$ Under the assumption, as illustrated in FIG. 5, the radius of the light reception array PI1 in the optical module 120 (the radius of the above-described curved shape around the measurement center Os, which applies throughout the description that follows) is $\varepsilon r1,$ the radius of the light reception array PI2 is $\varepsilon r2,$ the radius of the light reception array PA1 is $\varepsilon R1,$ and the radius of the light reception array PA2 is $\varepsilon R2.$ Thus, the first phase difference $\Delta\theta1$ and the second phase difference $\Delta\theta2$ are respectively represented by the following Formulae 2 and 3.

$$\Delta\theta1 = \Delta\theta \times (\varepsilon r1 - \varepsilon R1)/(\varepsilon r1 - \varepsilon r2) \cdots \text{(Formula 2)}$$

$$\Delta\theta2 = \Delta\theta \times (\varepsilon r1 - \varepsilon R2)/(\varepsilon r1 - \varepsilon r2) \cdots \text{(Formula 3)}$$

The above-described calculation method should not be construed in a limiting sense. Another possible method is to calculate an inclination angle $\theta s$ of the reflection slits of the disk 110 (see FIG. 5) relative to the optical module 120 based on the phase difference $\Delta\theta,$ and to calculate the first phase difference $\Delta\theta1$ and the second phase difference $\Delta\theta2$ based on the inclination angle $\theta s.$

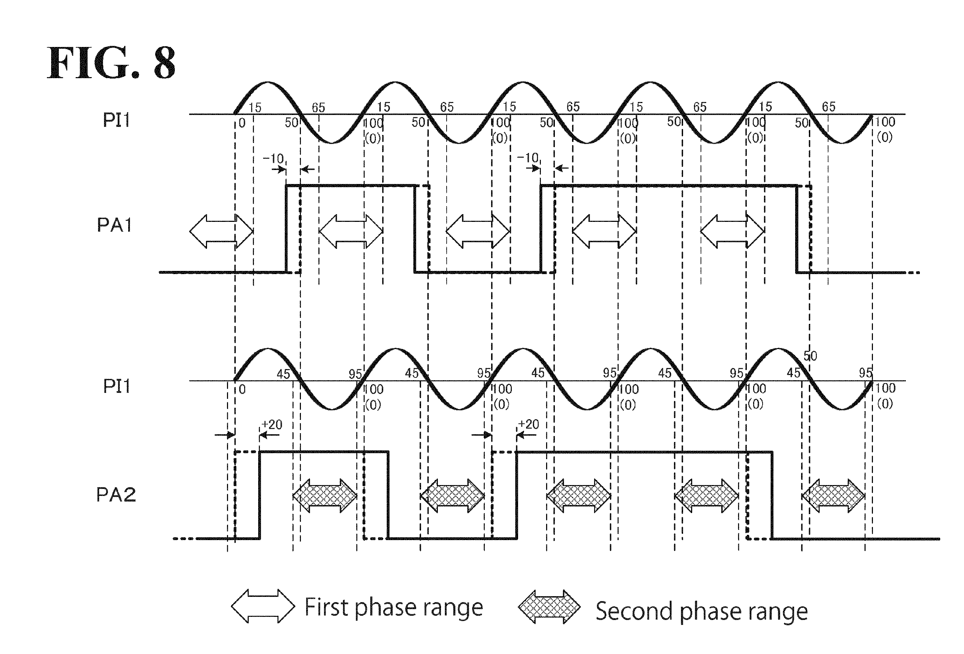

FIG. 8 illustrates exemplary waveforms of the light reception signals generated by the light reception arrays in an exemplary case where the first phase difference $\Delta\theta1$ calculated by the phase difference calculator 145 is -10% (the phase is advanced by 10%) and the second phase difference $\Delta\theta2$ calculated by the phase difference calculator 145 is +20% (the phase is delayed by 20%). The phase differences correspond to the inclination toward the imaginary line SL1.

In this case, the phase range identifier 146 regards the first phase range (75% to 25%) illustrated in FIG. 7 as a reference phase range (example of the first reference phase range). In the first phase range (75% to 25%), the first phase difference $\Delta\theta1$ is 0. Based on the reference phase range and the first phase difference $\Delta\theta1$ (-10%), the phase range identifier 146 identifies the first phase range as 65% (= 75% - 10%) to 15% (= 25% - 10%). Also, the phase range identifier 146 regards the second phase range (25% to 75%) illustrated in FIG. 7 as another reference phase range (example of the second reference phase range). In the second phase range (25% to 75%), the second phase difference $\Delta\theta2$ is 0. Based on the another reference phase range and the second phase difference (+20%), the phase range identifier 146 identifies the second phase range as 45% (= 25% + 20%) to 95% (= 75% + 20%). Then, when the phase of the light reception signal generated by the light reception array PI1 is within the first phase range, the signal selector 144 selects the light reception signal generated by the light reception array PA1. When the phase of the light reception signal generated by the light reception array PI1 is within the second phase range, the signal selector 144 selects the light reception signal generated by the light reception array PA2. Thus, even when an eccentricity occurs between the disk 110 and the shaft SH and/or an inclination occurs in the rotational direction of the optical module 120, the absolute position is identified using whichever light reception signal that is outside an area in which the amplitude is unstable, examples of such area including a point at which a detection pattern changes. This, in turn, improves detection accuracy.

In this embodiment, the phase range identifier 146 identifies the first phase range and the second phase range while ensuring that both ranges are 50%. Thus, when a phase difference occurs between the light reception signals generated by the light reception arrays PA1 and PA2, the first and second phase ranges identified by the phase range identifier 146 may overlap partially, as illustrated in FIG. 8. This causes such a range to occur that is not included in the first phase range nor in the second phase range in one period of the light reception signal generated by the light reception array PI1 (such range will be hereinafter referred to as "non-identified range"). In the example illustrated in FIG. 8, the first phase range overlaps with the second phase range in the phase range of 65% to 95%, making phase range of 15% to 45% a non-identified range.

In this embodiment, the amount of light that the light source 121 emits increases in this non-identified range. With the increased amount of light, the signal selector 144 selects one absolute signal from among the two absolute signals input from the light reception arrays PA1 and PA2 (or may select a predetermined one absolute signal from among the two absolute signals). This will be described in the following description.

As illustrated in FIG. 2, the controller 130 includes a current changer 150. At the timing of measuring the absolute position of the motor M (for example, when the encoder 100 is turned on), the current changer 150 increases the value of the current applied to the light source 121 beyond a predetermined current value. After the motor M has rotated, the current changer 150 changes the value of the current back into the predetermined current value. The term "predetermined current value" refers to a value of the current applied to the light source 121 in, for example, a steady operation of the motor M. The current changer 150 is an example of the current changing means for changing the value of the current into the predetermined current value.

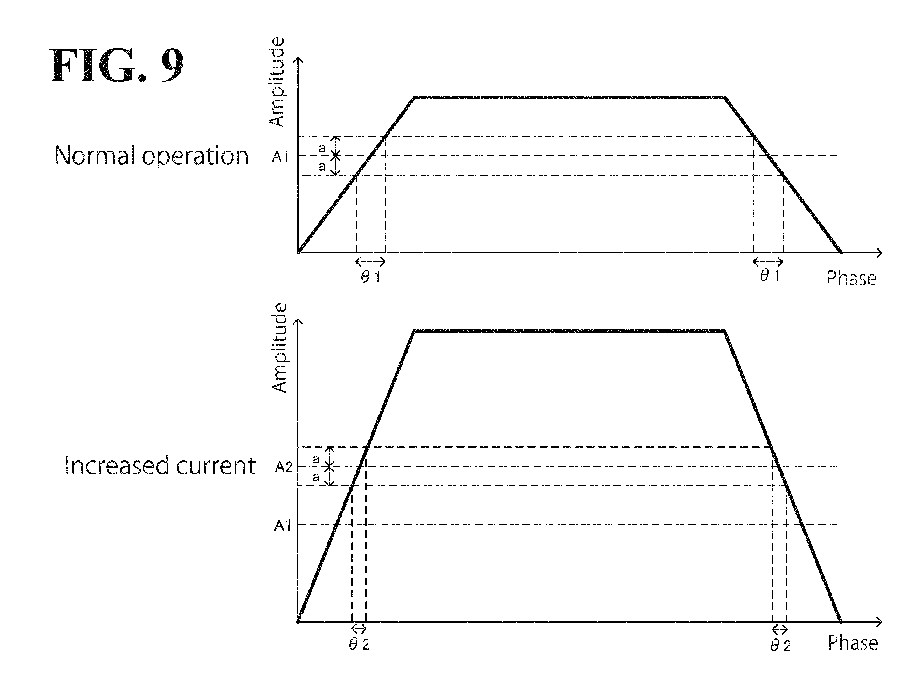

FIG. 9 illustrates exemplary waveforms of the light reception signals generated by the light reception arrays PA1 and PA2 in a case where the light source 121 is in normal state (for example, in a steady operation of the motor M) and in a case where the current applied to the light source 121 is increased (for example, when the encoder 100 is turned on). As illustrated in FIG. 9, the waveforms of the light reception arrays PA1 and PA2 each have an approximately trapezoidal shape, instead of a rectangular shape in a strict sense. Thus, in a transition area where the light reception signal transitions between ON and OFF, the amplitude increases in approximately proportional to the phase (or decreases in approximately inversely proportional to the phase). The absolute-position identifier 141 uses the comparator 148 to compare the amplitude of the light reception signal with the threshold. When the amplitude is in excess of the threshold, the absolute-position identifier 141 determines that the light reception element is in ON-state (which means that the signal is detected). When the amplitude is less than the threshold, the absolute-position identifier 141 determines that the light reception element is in OFF-state (which means that the signal is not detected). It should be noted that the threshold of the comparator includes a predetermined range of offset, and that in a phase range corresponding to the offset range, the operation of identifying whether the light reception element is ON or OFF is unstable.

In the example illustrated in FIG. 9, A1 indicates the threshold of the comparator 148 with an offset range of -$a$ to +$a$ in the normal operation. A phase range corresponding to the offset range 2$a$ is $\theta1$. When the current applied to the light source 121 is increased, the amount of light that the light source 121 emits increases, which in turn increases the amplitude. Thus, in the transition area where the light reception signal transitions between ON and OFF, the inclination of the waveform is steep compared with the inclination in the normal operation, and a phase range corresponding to the offset range 2$a$ of the threshold is $\theta2$, which is smaller than the $\theta1$. This minimizes the area in which the operation of identifying whether the light reception element is ON or OFF is unstable, and increases the area in which the operation of identifying whether the light reception element is ON or OFF is stable.

As described above, the absolute-position identifier 141 includes the threshold changer 149. At the timing of measuring the absolute position of the motor M (for example, when the encoder 100 is turned on), the threshold changer 149 increases the threshold of the comparator 148 beyond a predetermined value, and changes the threshold back into the predetermined value after the motor M has rotated. In the example illustrated in FIG. 9, the threshold of the comparator 148 is A1 (example of the predetermined value) in the normal operation. When the current applied to the light source 121 is increased, the threshold changer 149 increases the threshold of the comparator 148 to A2, which is higher than A1. The threshold changer 149 is an example of the threshold changing means for changing the predetermined threshold into the predetermined value.

Among the four incremental signals of different phases included in the low-incremental signal input from the light reception array PI1, the first-position identifier 142, which is illustrated in FIG. 6, performs subtraction between two incremental signals having 180° phase difference, and between the other two incremental signals having 180° phase difference. The subtraction between each pair of two incremental signals having 180° phase difference cancels out a production error, a measurement error, and other possible errors associated with the reflection slits in one pitch. The signals resulting from the subtraction will be referred to as "first incremental signal" and "second incremental signal". The first incremental signal and the second incremental signal have 90° phase difference in electrical angle with respect to each other (these signals will be simply referred to as "A-phase signal" and "B-phase signal"). Based on these two signals, the first-position identifier 142 identifies the position of the motor M in one pitch. There is no particular limitation to the method of identifying the position of the motor M in one pitch. An exemplary method in a case where the low-incremental signal (periodic signal) is a sinusoidal signal is to perform division between the two, A-phase and B-phase sinusoidal signals and to perform an arctan operation of the quotient so as to calculate electrical angle $\phi$. Another exemplary method is to convert the two sinusoidal signals into electrical angle $\phi$ using a tracking circuit. Still another exemplary method is to use a predetermined table from which to identify an electrical angle $\phi$ associated with the values of the A-phase and B-phase signals. In this respect, the first-position identifier 142 preferably performs analogue-digital conversion of the two, A-phase and B-phase sinusoidal signals in every detection signal.

With respect to the high-incremental signal input from the light reception array PI2, the second-position identifier 143 performs processing similar to the above-described processing performed by the first-position identifier 142, and identifies a more accurate position in one pitch based on two signals.

The position data calculator 147 superimposes the first position data identified by the first-position identifier 142 over the absolute position identified by the absolute-position identifier 141. This ensures an absolute position with a resolution higher than the resolution of the absolute position that is based on the absolute signal. In this embodiment, the resolution of the calculated absolute position corresponds to the number of the slits in the shorter-pitched slit track SI2. Specifically, in this embodiment, the resolution of the calculated absolute position is twice the resolution of the absolute position that is based on the absolute signal. The position data calculator 147 also superimposes the second position data identified by the second-position identifier 143 over the absolute position calculated based on the low-incremental signal. This ensures an absolute position with a resolution still higher than the resolution of the absolute position calculated based on the low-incremental signal. Then, the position data calculator 147 multiplies the calculated absolute position to further improve the resolution so as to generate position data indicating a more highly accurate absolute position. The above-described method involving use of a plurality of position data of different resolutions to identify an absolute position with high resolution will be referred to as "build-up approach".

The position data generator 140 outputs the position data indicating a more highly accurate absolute position to the control device CT.

<3. Exemplary advantageous effects of this embodiment>

In the above-described embodiment, based on the two light reception signals obtained from the light reception arrays PA1 and PA2, the signal selector 144 selects one light reception signal from among the two light reception signals input from the light reception arrays PI1 and PI2. When an eccentricity occurs between the disk 110 and the shaft SH, or when the optical module 120 is disposed at an angle in, for example, the rotational direction about the optical axis, a phase difference may occur between the two light reception signals obtained from the light reception arrays PI1 and PI2. In view of this, the phase difference is taken into consideration when the signal selector 144 selects one light reception signal from among the two light reception signals input from the light reception arrays PA1 and PA2. This minimizes errors in the detection of the absolute position and improves reliability of the position data, even when an eccentricity occurs between the disk 110 and the shaft SH, or even when the optical module 120 is disposed at an angle in, for example, the rotational direction about the optical axis.

It is of particular note in this embodiment that the phase range identifier 146 identifies the first phase range and the second phase range. When the phase of the light reception signal obtained from the light reception array PI1 is within the first phase range, the signal selector 144 selects the light reception signal input from the light reception array PA1. When the phase of the light reception signal obtained from the light reception array PI1 is within the second phase range, the signal selector 144 selects the light reception signal input from the light reception array PA2. In the first phase range, the amplitude of the light reception signal input from the light reception array PA1 is more stable than the amplitude of the light reception signal input from the light reception array PA2. In the second phase range, the amplitude of the light reception signal input from the light reception array PA2 is more stable than the amplitude of the light reception signal input from the light reception array PA1. This ensures that the absolute position is identified using whichever light reception signal that is outside an area in which the amplitude is unstable, examples of such area including a point at which a detection pattern changes. This, in turn, improves detection accuracy.

Based on two light reception signals obtained from the light reception arrays PI1 and PI2, the phase range identifier 146 identifies the first phase range and the second phase range. This ensures that the phase difference between the two light reception signals obtained from the light reception arrays PI1 and PI2 is taken into consideration when the phase range identifier 146 identifies the first phase range and the second phase range. This ensures that the absolute position is identified using whichever light reception signal, among the two light reception signals input from the light reception arrays PA1 and PA2, that is in an area where the amplitude is more stable, even when an eccentricity occurs between the disk 110 and the shaft SH, or even when the optical module 120 is disposed at an angle in, for example, the rotational direction about the optical axis. This minimizes errors in the detection of the absolute position and improves reliability of the position data.

It is of particular note in this embodiment that the phase difference calculator 145 calculates the phase difference $\Delta\theta$ between the two light reception signals input from the light reception arrays PI1 and PI2. Based on the phase difference $\Delta\theta$, the phase difference calculator 145 calculates the first phase difference $\Delta\theta 1$, which the light reception signal obtained from the light reception array PA1 has relative to the light reception signal input from the light reception array PI1, and calculates the second phase difference $\Delta\theta 2$, which the light reception signal obtained from the light reception array PA2 has relative to the light reception signal input from the light reception array PI1. Thus, the phase range identifier 146 uses the calculated first phase difference $\Delta\theta 1$ and the first reference phase range, or uses the calculated second phase difference $\Delta\theta 2$ and the second reference phase range to accurately identify the first phase range and the second phase range. This minimizes errors in the detection of the absolute position and improves reliability of the position data

It is of particular note in this embodiment that the encoder 100 includes the light reception array PI1 and the light reception array PI2. The light reception array PI1 corresponds to the slit track SI1, and the light reception array PI2 corresponds to the slit track SI2. The light reception array PI2 receives light reflected by the slit track SI2, which has an incremental pattern with a pitch shorter than the pitch of the incremental pattern of the slit track SI1. That is, in the encoder 100, the light reception array PI1 corresponds to the comparatively-longer-pitched slit track SI1 with a lower resolution, while the light reception array PI2 corresponds to the comparatively-shorter-pitch slit track SI2 with a higher resolution. Thus, by what is called "build-up approach", which uses a plurality of position data having different resolutions to identify the absolute position with high resolution, position data indicating an absolute position with high resolution is generated. In this manner, high resolution is realized.

It is of particular note in this embodiment that each of the slits of the slit tracks SA1, SA2, SI1, and SI2 reflects light emitted from the light source 121, and the light reception arrays PA1, PA2, PI1, and PI2 receive light respectively reflected from the slit tracks SA1, SA2, SI1, and SI2. Thus, the encoder 100 is a reflection encoder. This ensures closeness of the light reception arrays PA1, PA2, PI1, and PI2 to the light source 121, reducing the encoder 100 in size.

This embodiment further provides the following advantageous effects. With a configuration in which the current applied to the light source 121 is not variable, the following may occur. As described above, an unstable area may occur that is not included in the first phase range nor in the second phase range in one period of the light reception signal obtained from the light reception array PI1. In this case, previous position data are accumulated for use in the unstable area, in an attempt to maintain reliability of the position data. However, no previously accumulated position data exists at the time when the encoder 100 is turned on, and if the phase of the light reception signal obtained from the light reception array PI1 at the time when the encoder 100 is turned on includes an unstable area, an error may occur in the detection of the absolute position.

In this embodiment, the current changer 150 increases the value of the current applied to the light source 121 beyond a predetermined current value when the encoder 100 is turned on, and changes the value of the current value into the predetermined current value after the motor M has rotated. Thus, when the encoder 100 is turned on, the amount of light that the light source 121 emits is temporarily increased, and thus the amplitudes of the light reception signals obtained from the light reception arrays PA1 and PA2 are increased. This enlarges the area that is stably identifiable as to whether the light reception element is ON or OFF. This minimizes the possibility of instable identification as to whether the light reception signals input from the light reception arrays PA1 and PA2 are ON or OFF at the time when the encoder 100 is turned on. This, in turn, minimizes errors in the detection of the absolute position.

It is of particular note in this embodiment that the threshold changer 149 increases the threshold of the comparator 148 beyond a predetermined value when the encoder 100 is turned on, and changes the threshold into the predetermined value after the motor M has rotated. This ensures accurate determination as to whether the light reception signal of each light reception element has been detected or not detected, even when the current applied to the light source 121 is increased when the encoder 100 is turned on. This minimizes errors in the detection of the absolute position at the time when the encoder 100 is turned on.

It is of particular note in this embodiment that two light reception arrays PI1 and PI2 are disposed at positions offset from each other in the width direction R with the light source 121 between the two light reception arrays PI1 and PI2, and that the two light reception arrays PA1 and PA2 are disposed at positions offset from each other in the width direction R with the two light reception arrays PI1 and PI2 between the two light reception arrays PA1 and PA2. This ensures the following advantageous effects.

In an exemplary case where the light source 121 is an LED, the light source 121 may show a high degree of directivity in light distribution. In this case, a comparatively greater change occurs in the light amount (light intensity) of the reflection light in an area adjacent to the light source 121, whereas a comparatively smaller change occurs in the light amount of the reflection light in other areas. In each of the two light reception arrays PA1 and PA2, which output absolute signals, bit patterns indicating detection or undetection of the light reception signals of a plurality of light reception elements uniquely indicate the absolute position. Because of this nature of the absolute signal, if the light reception amount varies among the light reception elements, it is more likely that the absolute position is detected erroneously. In view of this, the light reception amount is preferably uniform throughout the light reception elements, and the light reception arrays PA1 and PA2 are preferably disposed in an area where change in the light amount is small or minimal. In this embodiment, the light reception arrays PA1 and PA2 are disposed with the light reception arrays PI1 and PI2 between the light reception arrays PA1 and PA2. Thus, the light reception arrays PA1 and PA2 are spaced apart from the light source 121, that is, the light reception arrays PA1 and PA2 are disposed in the area where change in the light amount is small or minimal. This, as a result, improves reliability of the light reception signals output from the light reception arrays PA1 and PA2.

As described above, in each of the two light reception arrays PA1 and PA2, which output absolute signals, bit patterns indicating detection or undetection of the light reception signals of a plurality of light reception elements uniquely indicate the absolute position. In contrast, in each of the light reception arrays PI1 and PI2, which output incremental signals, detection signals with corresponding phases generated by a plurality of light reception elements are added together to indicate a position in one pitch. Because of this nature of the incremental signal, noise is averaged in the light reception arrays PI1 and PI2, which makes the light reception arrays PI1 and PI2 comparatively highly resistant to noise. In contrast, the light reception arrays PA1 and PA2 require a stable light reception amount and are comparatively low in resistance to noise. In an exemplary case where the light source 121 is an LED, DC noise light unchanging over time occurs in an area adjacent to the light source. In this embodiment, the light reception arrays PA1 and PA2 are disposed with the light reception arrays PI1 and PI2 between the light reception arrays PA1 and PA2. Thus, the light reception arrays PI1 and PI2, which are higher in resistance to noise, are disposed at positions adjacent to the light source 121, while the light reception arrays PA1 and PA2, which are lower in resistance to noise, are disposed at positions apart from the light source 121. This minimizes the influence of the DC noise light.

<4. Modifications>

Obviously, numerous modifications and variations of the present disclosure are possible in light of the above teachings. It is therefore to be understood that within the scope of the appended claims, the present disclosure may be practiced otherwise than as specifically described herein.

The arrangement of the light reception arrays will not be limited to the arrangement according to the above-described embodiment. Any other manner of arrangement than the arrangement according to the above-described embodiment is possible insofar as the two light reception arrays PI1 and PI2, which correspond to incremental patterns, are offset from each other in the width direction R.

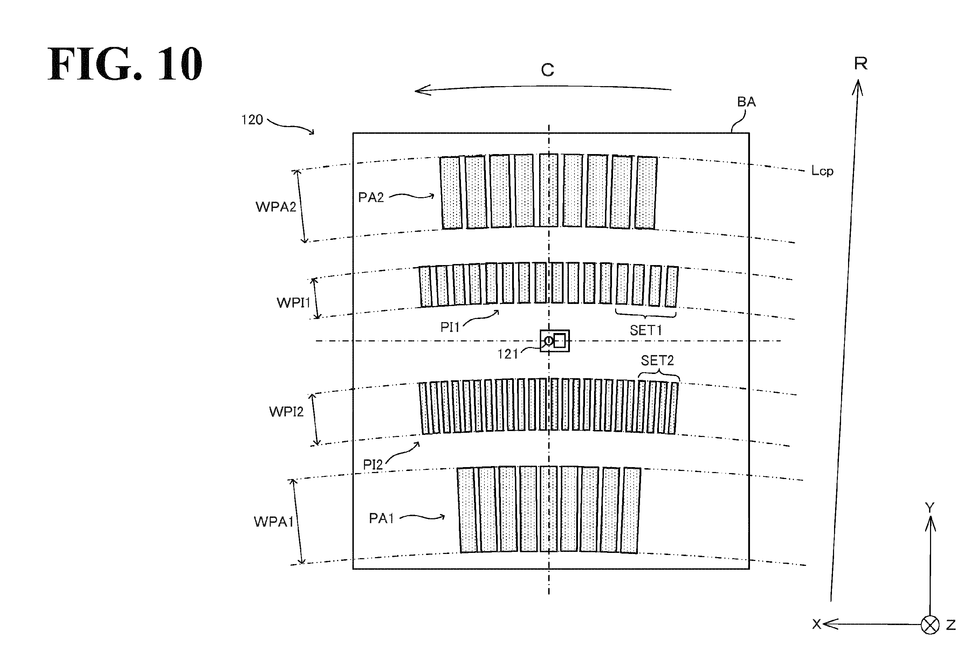

In the above-described embodiment, the light reception array PI1 is disposed further inward than the light reception array PI2. Another possible example is that the light reception array PI1 is disposed further outward than the light reception array PI2, as illustrated in FIG. 10. In this case, the four slit tracks SA1, SI2, SI1, and SA2 are disposed on the disk 110 in the order, from inward to outward in the width direction R: SA1, SI2, SI1, SA2, which is not elaborated in the drawings. This configuration is preferred when higher robustness is desired against eccentricity associated with the low-incremental signal, whereas the configuration according to the above-described embodiment is preferred when higher robustness is desired against eccentricity associated with the high-incremental signal.

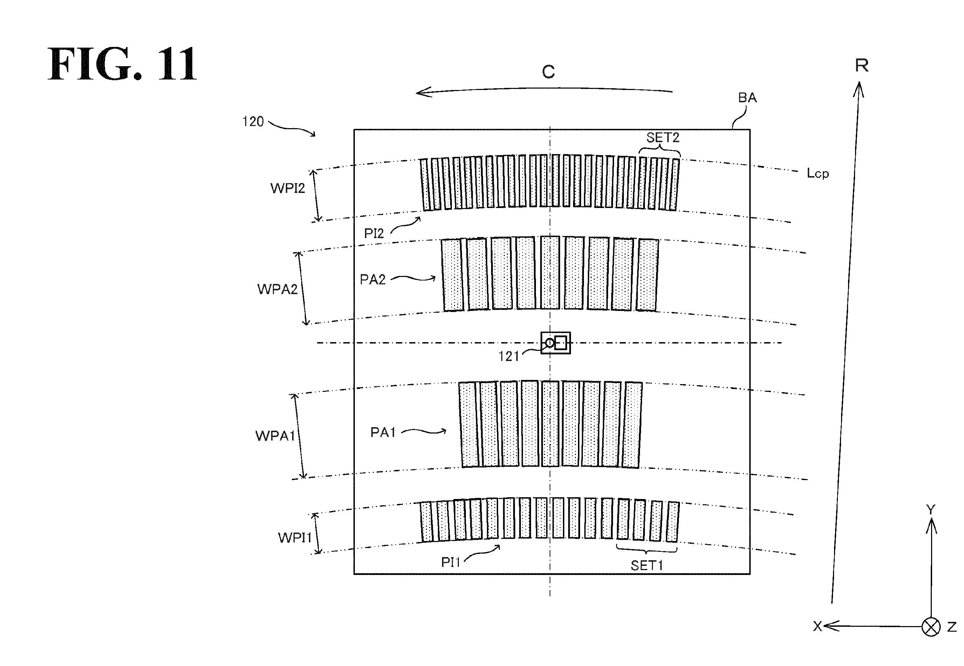

In the above-described embodiment, the light reception arrays PA1 and PA2 are disposed with the light reception arrays PI1 and PI2 between the light reception arrays PA1 and PA2. Another possible example is illustrated in FIG. 11, where the light reception arrays PI1 and PI2 are disposed outward than the light reception arrays PA1 and PA2, that is, the light reception arrays PA1 and PA2 are disposed between the light reception arrays PI1 and PI2. This configuration ensures the following advantageous effects. The light reception signals output from the light reception arrays PA1 and PA2 are used as a basis for identifying the ultimate absolute position, and thus accuracy and responsiveness are required of the light reception signals in order to improve accuracy of the absolute position. Thus, the positions at which the light reception arrays PA1 and PA2 are disposed are an important factor of improvement in accuracy of the absolute position. In this embodiment, the light reception arrays PI1 and PI2 are disposed with the light reception arrays PA1 and PA2 between the light reception arrays PI1 and PI2. This arrangement ensures that the light reception arrays PA1 and PA2 are disposed adjacent to the light source 121, considering that the light reception arrays PA1 and PA2 are comparatively more influential in the accuracy of identifying the absolute position. This improves responsiveness, resulting in improved accuracy of the absolute position.

In the configuration illustrated in FIG. 11, the light reception array PI1 may be disposed further outward than the light reception array PI2.

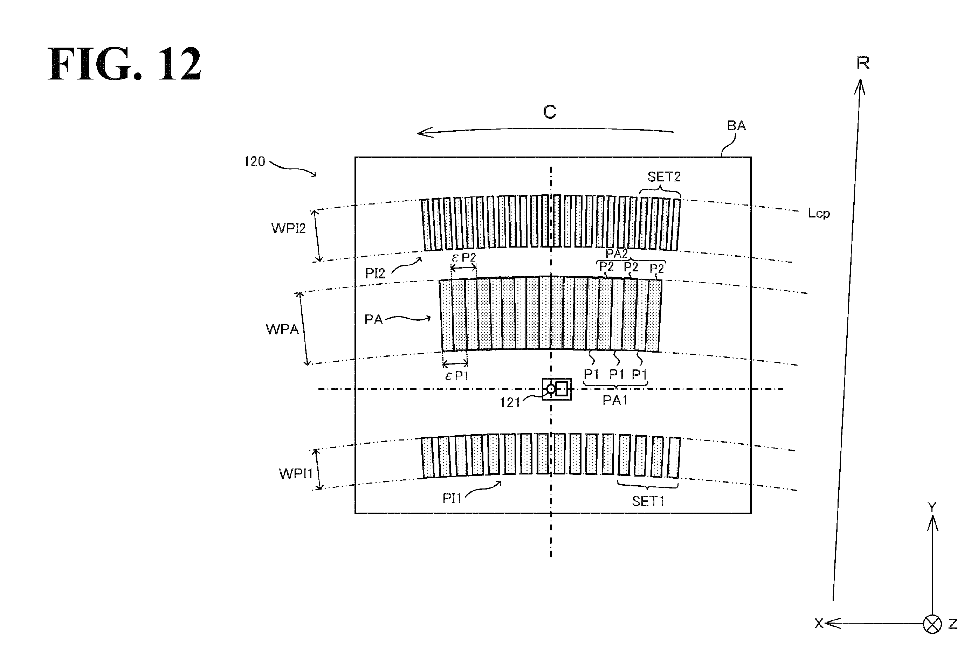

In the above-described embodiment, the light reception arrays PA1 and PA2 are two tracks offset from each other in the width direction R. This, however, should not be construed as limiting the arrangement of the light reception arrays PA1 and PA2. Another possible example is illustrated in FIG. 12, where the light reception elements P1 and P2 respectively of the light reception arrays PA1 and PA2 alternate in the measurement direction C to form one track of a light reception array PA.

In this example, the pitch of the light reception element P1 and the pitch of the light reception element P2 correspond to the minimal pitch (pitch $P1$) in the measurement direction C of the reflection slits of the slit tracks SA1 and SA2 (specifically, the pitches correspond to the minimal length of the projected image, which is, $\varepsilon \times$ P1), and each of the lengths of the light reception elements P1 and P2 in the measurement direction C is half $\varepsilon \times$ P1. This ensures that the light reception arrays PA1 and PA2 are offset from each other by half a bit (corresponding to half a pitch $P1$) in the measurement direction C. Thus, similarly to the above-described embodiment, when the absolute position obtained from the slit track SA1 corresponds to an area of bit pattern transition, the detection signal obtained from the slit track SA2 is used to calculate the absolute position. When the absolute position obtained from the slit track SA2 corresponds to an area of bit pattern transition, the detection signal obtained from the slit track SA1 is used to calculate the absolute position.

In this case, the three slit tracks SI1, SA, and SI2 are disposed on the disk 110 in the width direction R in the order, from inward to outward in the width direction R: SI1, SA, SI2, which is not elaborated in the drawings. The slit track SA has a configuration similar to the configuration of the slit track SA1 or SA2.

In this modification, the light reception elements P1 and P2 respectively of the light reception arrays PA1 and PA2 alternate to form a single light reception array PA. This makes the slit track SA a single track and makes the light reception array PA a single track. This, in turn, reduces the disk 110 and the optical module 120 in size, resulting in a reduction in size of the encoder 100.

In the above-described embodiment, the two light reception arrays PI1 and PI2 are offset from each other in the width direction R, receive light respectively reflected by the slit tracks SI1 and SI2, which have mutually different pitches, and output pieces of position data having mutually different resolutions. This, however, should not be construed as limiting the configurations of the two light reception arrays PI1 and PI2. For example, the two light reception arrays PI1 and PI2 may receive light respectively reflected by slit tracks having identical pitches to output pieces of position data having identical resolutions.

The above-described embodiment is directed to what is called a reflective encoder, in which the light source and the light reception arrays are disposed on the same side relative to the slit tracks disposed on the disk 110. This, however, should not be construed in a limiting sense. Another possible example is a transmissive encoder, with the light source and the light reception array opposed to each other across the disk 110. In the transmissive encoder, each slit of the slit tracks SA1, SA2, SI1, and SI2 may be a transmissive slit on the disk 110. Alternatively, portions other than the slits may be subjected to sputtering or similar processing into coarse surfaces. Still alternatively, it is possible to use a low-transmittance material for the portions other than the slits. In this modification, the light source 121 is opposed to the light reception arrays PA1, PA2, PI1, and PI2 across the disk 110. Thus, the optical module 120 according to this modification encompasses a configuration in which the light source and the light reception arrays are separated from each other. This transmissive encoder ensures advantageous effects similar to the advantageous effects provided in the above-described embodiment.

| | |
|---|---|
| 100 | Encoder |
| 110 | Disk |
| 121 | Light source |
| 140 | Position data generator (example of the position data generating means) |
| 144 | Signal selector (example of the selecting means) |
| 145 | Phase difference calculator (example of the calculating means) |
| 146 | Phase range identifier (example of the identifying means) |
| 148 | Comparator (example of the comparing means) |
| 149 | Threshold changer (example of the threshold changing means) |
| 150 | Current changer (example of the current changing means) |
| C | Measurement direction |
| CT | Control device |
| M | Motor |
| PA1, PA2 | Light reception array (example of the second light reception array) |
| PI1 and PI2 | Light reception array (example of the first light reception array) |
| S | Servo system |
| SA1 | Slit track (example of the second slit track) |
| SA2 | Slit track (example of the second slit track) |
| SH | Shaft (example of the rotor) |
| SI1 | Slit track (example of the first slit track) |
| SI2 | Slit track (example of the first slit track) |
| SM | Servo motor (example of the encoder-equipped motor) |

Claims

1. An encoder (100), **characterized by**:

a disk (110) disposed on a rotor;
a plurality of first slit tracks (SI1, SI2) disposed on the disk (110) and each comprising a plurality of slits arranged in an incremental pattern in a measurement direction;
at least one second slit track (SA1, SA2) disposed on the disk (110) and comprising a plurality of slits arranged in an absolute pattern in the measurement direction;
a light source (121) configured to emit light to the plurality of first slit tracks (SI1, SI2) and to the at least one second slit track (SA1, SA2);
two first light reception arrays (PI1, PI2) disposed at positions offset from each other in a width direction approximately perpendicular to the measurement direction, the two first light reception arrays (PI1, PI2) being configured to receive the light reflected by or transmitted through the plurality of first slit tracks (SI1, SI2) respectively corresponding to the two first light reception arrays (PI1, PI2) so as to output two first light reception signals;
two second light reception arrays (PA1, PA2) configured to receive the light reflected by or transmitted through the at least one second slit track (SA1, SA2) respectively corresponding to the two second light reception arrays (PA1, PA2) so as to output two second light reception signals having phases different from each other;
selecting means (144) for selecting one second light reception signal from among the two second light reception signals based on the two first light reception signals; and
position data generating means (140) for generating position data of the rotor based on at least one first light reception signal among the two first light reception signals and based on the one second light reception signal selected by the selecting means (144).

2. The encoder (100) according to claim 1, further comprising identifying means (146) for identifying a first phase range and a second phase range in a period of the at least one first light reception signal based on the two first light reception signals,
wherein in the first phase range, an amplitude of the one second light reception signal is more stable than an amplitude of another second light reception signal among the two second light reception signals,
wherein in the second phase range, the amplitude of the another second light reception signal is more stable than the amplitude of the one second light reception signal, and
wherein the selecting means (144) selects the one second light reception signal when a phase of the at least one first light reception signal is in the first phase range, and selects the another second light reception signal when the phase of at least one first light reception signal is in the second phase range.

3. The encoder (100) according to claim 2, further comprising calculating means (145) for calculating a first phase difference and a second phase difference based on a phase difference between the two first light reception signals,
wherein the first phase difference is for the one second light reception signal relative to the at least one first light reception signal,
wherein the second phase difference is for the another second light reception signal relative to the at least one first light reception signal,
wherein the identifying means (146) identifies the first phase range based on a first reference phase range and based on the first phase difference, and identifies the second phase range based on a second reference phase range and based on the second phase difference, and
wherein the first reference phase range is for the first phase difference at 0, and wherein the second reference phase range is for the second phase difference at 0.

4. The encoder (100) according to any one of claims 1 to 3,
wherein the two first light reception arrays (PI1, PI2) comprise a third light reception array and a fourth light reception array,
wherein the plurality of first slit tracks (SI1, SI2) comprise a third slit track and a fourth slit track,
wherein the third slit track corresponds to the third light reception array, and the fourth slit track corresponds to the fourth light reception array,
wherein the third light reception array is configured to receive the light reflected by or transmitted through the third slit track, and the fourth light reception array is configured to receive the light reflected by or transmitted through the fourth slit track, and
wherein a pitch of the incremental pattern of the fourth slit track is shorter than a pitch of the incremental pattern of the third slit track.

5. The encoder (100) according to any one of claims 1 to 4,
wherein each of the plurality of slits of the plurality of first slit tracks (SI1, SI2) and each of the plurality of slits of the at least one second slit track (SA1, SA2) are configured to reflect the light emitted from the light source (121), and
wherein the two first light reception arrays (PI1, PI2) are respectively configured to receive the light reflected by the plurality of first slit tracks (SI1, SI2), and the two second light reception arrays (PA1, PA2) are respectively configured to receive the light reflected by the at least one second slit track (SA1, SA2).

6. The encoder (100) according to any one of claims 1 to 5, further comprising current changing means (150) for increasing a value of a current applied to the light source (121) beyond a predetermined current value when the encoder (100) is turned on, and for changing the value of the current into the predetermined current value after the rotor has rotated.

7. The encoder (100) according to claim 6, further comprising:

comparing means (148) for comparing amplitudes of the two second light reception signals with a predetermined threshold; and

threshold changing means (149) for increasing the predetermined threshold beyond a predetermined value when the encoder (100) is turned on, and for changing the predetermined threshold into the predetermined value after the rotor has rotated.

8. The encoder (100) according to any one of claims 1 to 7,
   wherein the two first light reception arrays (PI1, PI2) are disposed at the positions offset from each other in the width direction with the light source (121) between the two first light reception arrays (PI1, PI2), and
   wherein the two second light reception arrays (PA1, PA2) are disposed at positions offset from each other in the width direction with the two first light reception arrays (PI1, PI2) between the two second light reception arrays (PA1, PA2).

9. The encoder (100) according to any one of claims 1 to 7,
   wherein the two second light reception arrays (PA1, PA2) are disposed at positions offset from each other in the width direction with the light source (121) between the two second light reception arrays (PA1, PA2), and
   wherein the two first light reception arrays (PI1, PI2) are disposed at positions offset from each other in the width direction with the two second light reception arrays (PA1, PA2) between the two first light reception arrays (PI1, PI2).

10. The encoder (100) according to any one of claims 1 to 7,
    wherein one second light reception array among the two second light reception arrays (PA1, PA2) comprises first light reception elements, and another second light reception array among the two second light reception arrays (PA1, PA2) comprises second light reception elements,
    wherein the two second light reception arrays (PA1, PA2) comprise a single track (PA) in which the first light reception elements and the second light reception elements alternate, and
    wherein the two first light reception arrays (PI1, PI2) are disposed at the positions offset from each other in the width direction with the light source and the two second light reception arrays (PA1, PA2) between the two first light reception arrays (PI1, PI2).

11. An encoder-equipped motor (SM), **characterized by**:

    a motor (M) comprising:

        a stator; and
        a rotor (SH) configured to rotate relative to the stator; and

    the encoder (100) according to any one of claims 1 to 10, the encoder (100) being configured to detect at least one of a position of the rotor and a speed of the rotor.

12. A servo system (S), **characterized by**:

    a motor (M) comprising:

        a stator; and
        a rotor (SH) configured to rotate relative to the stator;

    the encoder (100) according to any one of claims 1 to 10, the encoder (100) being configured to detect at least one of a position of the rotor and a speed of the rotor; and
    a control device (CT) configured to control the motor (M) based on a result of the encoder (100) detecting at least one of the position of the rotor and the speed of the rotor.

# FIG. 1

EP 2 930 472 A1

# FIG. 2

# FIG. 3

EP 2 930 472 A1

# FIG. 4

EP 2 930 472 A1

FIG. 5

# FIG. 6

EP 2 930 472 A1

# FIG. 7

# FIG. 8

First phase range   Second phase range

EP 2 930 472 A1

**FIG. 9**

# FIG. 10

EP 2 930 472 A1

FIG. 11

EP 2 930 472 A1

# FIG. 12

Europäisches
Patentamt

European
Patent Office

Office européen
des brevets

# EUROPEAN SEARCH REPORT

**Application Number**

EP 15 16 2732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/205527 A1 (YOSHIDA YASUSHI [JP] ET AL) 16 August 2012 (2012-08-16) * paragraphs [0006] - [0124] * ----- | 1-12 | INV. G01D5/347 |
| Y | WO 2007/123522 A1 (FLOWSERVE MAN CO [US]; DOLENTI WILLIAM T [US]; FLEURY BYRON [US]; MORR) 1 November 2007 (2007-11-01) * page 1, line 32 - page 2, line 5 * * page 11, line 27 - page 12, line 4 * ----- | 1-12 | |
| Y | EP 2 639 558 A1 (YASKAWA DENKI SEISAKUSHO KK [JP]) 18 September 2013 (2013-09-18) * paragraphs [0008] - [0070] * ----- | 1-12 | |
| Y | EP 2 302 333 A2 (YASKAWA DENKI SEISAKUSHO KK [JP]) 30 March 2011 (2011-03-30) * paragraphs [0006] - [0182] * ----- | 1-12 | |
| Y | US 4 914 437 A (KIBRICK ROBERT I [US] ET AL) 3 April 1990 (1990-04-03) * column 4, line 32 - column 49, line 42 * ----- | 1-12 | TECHNICAL FIELDS SEARCHED (IPC) G01D |

The present search report has been drawn up for all claims

| Place of search | Date of completion of the search | Examiner |
|---|---|---|
| Munich | 14 August 2015 | Kurze, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 2732

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2015

| Patent document cited in search report | | Publication date | Patent family member(s) | | Publication date |
|---|---|---|---|---|---|
| US 2012205527 | A1 | 16-08-2012 | CN | 102636199 A | 15-08-2012 |
| | | | CN | 103348219 A | 09-10-2013 |
| | | | EP | 2887025 A1 | 24-06-2015 |
| | | | JP | 4816988 B1 | 16-11-2011 |
| | | | JP | 5527637 B2 | 18-06-2014 |
| | | | JP | 2012167949 A | 06-09-2012 |
| | | | KR | 20120092066 A | 20-08-2012 |
| | | | US | 2012205527 A1 | 16-08-2012 |
| | | | US | 2013306849 A1 | 21-11-2013 |
| | | | WO | 2012108078 A1 | 16-08-2012 |
| WO 2007123522 | A1 | 01-11-2007 | BR | PI0621590 A2 | 13-12-2011 |
| | | | CA | 2649642 A1 | 01-11-2007 |
| | | | CN | 101473185 A | 01-07-2009 |
| | | | DE | 112006003859 T5 | 09-04-2009 |
| | | | GB | 2450663 A | 31-12-2008 |
| | | | GB | 2479089 A | 28-09-2011 |
| | | | US | 2010001177 A1 | 07-01-2010 |
| | | | WO | 2007123522 A1 | 01-11-2007 |
| EP 2639558 | A1 | 18-09-2013 | CN | 103210284 A | 17-07-2013 |
| | | | EP | 2639558 A1 | 18-09-2013 |
| | | | JP | 4945674 B2 | 06-06-2012 |
| | | | JP | 2012103032 A | 31-05-2012 |
| | | | RU | 2013120078 A | 20-12-2014 |
| | | | US | 2013229138 A1 | 05-09-2013 |
| | | | WO | 2012063806 A1 | 18-05-2012 |
| EP 2302333 | A2 | 30-03-2011 | CN | 102023028 A | 20-04-2011 |
| | | | EP | 2302333 A2 | 30-03-2011 |
| | | | JP | 5170046 B2 | 27-03-2013 |
| | | | JP | 2011064612 A | 31-03-2011 |
| | | | KR | 20110031118 A | 24-03-2011 |
| | | | US | 2011069390 A1 | 24-03-2011 |
| US 4914437 | A | 03-04-1990 | NONE | | |

EPO FORM P0459

For more details about this annex : see Official Journal of the European Patent Office, No. 12/82

**EP 2 930 472 A1**

**REFERENCES CITED IN THE DESCRIPTION**

**Patent documents cited in the description**

• JP 2012103032 A